# DEMANDE DE BREVET EUROPEEN

(11) **EP 1 132 353 A1**
(43) Date de publication de la demande: **12.09.2001**
(21) Numéro de dépôt: 01420057.0
(22) Date de dépôt: 05.03.2001
(51) Int. Cl.: C03C 25/10

(54) **Toile de verre à peindre pour la finition et la décoration de l'intérieur de bâtiments**

(30) Priorité: 08.03.2000 FR 0002998
(71) Demandeur: Mermet S.A., 38115 Veyrins Thuellin (FR)
(72) Inventeur: Gevaux, Pascal, 38110 Saint Jean de Soudain (FR); Bru, Bernard, 38300 Bourgoin Jallieu (FR)
(74) Mandataire: Maureau, Philippe

(57) **Abrégé**

Cette toile est constituée par un tissu (2) à contexture fermée et présentant une surface lisse, dont la face arrière, destinée à être appliquée contre un support, tel qu'un mur, comporte une couche barrière (3) compatible avec la colle, occultant le support et empêchant la migration de colle à travers le tissu, et dont la face avant comporte localement des zones (4) revêtues d'un apprêt hydrophobe appliqué suivant des motifs qui sont à révéler après application d'une couche de peinture (7).

## Description

La présente invention a pour objet une toile de verre à peindre pour la finition et la décoration de l'intérieur de bâtiments.

Il est connu d'utiliser de la toile de verre à peindre au lieu de papier-peint, pour réaliser la finition et la décoration de l'intérieur de bâtiments. L'avantage de cette toile en tissu de verre est qu'elle est très résistante, et qu'elle peut masquer certaines fissures du mur formant support sans fissurer elle-même. Différents décors peuvent être obtenus, qui résultent de la nature du tissage, permettant la formation de motifs en relief, tels que des carrés, des chevrons..., de différentes tailles. Une toile de verre traditionnelle est fixée sur le support devant la recevoir, tel qu'un mur, par collage, après quoi une ou plusieurs couches de peinture sont appliquées de façon uniforme sur la toile.

Comme indiqué précédemment, les seules possibilités de décoration d'un mur revêtu d'une telle toile résident dans le motif résultant de l'armure du tissu.

Le but de l'invention est de fournir une toile de verre à peindre, qui soit obtenue selon une technique de tissage traditionnelle, et qui permette, après pose sur un mur et application de peinture, l'obtention de motifs décoratifs, sans nécessiter une mise en oeuvre particulière, ni lors de l'application de la toile de verre sur son support, ni lors de l'application de la peinture sur la toile de verre.

A cet effet, la toile de verre qu'elle concerne, est constituée par un tissu à contexture fermée et présentant une surface lisse, dont la face arrière, destinée à être appliquée contre un support, tel qu'un mur, comporte une couche barrière compatible avec la colle, occultant le support et empêchant la migration de colle à travers le tissu, et dont la face avant comporte localement des zones revêtues d'un apprêt hydrophobe appliqué suivant des motifs qui sont à révéler après application d'une couche de peinture.

Après tissage, il est procédé à l'application sur la face arrière du tissu de la couche barrière, puis à l'application d'un apprêt hydrophobe, sur sa face avant dans les zones devant comporter des motifs à révéler après application d'une couche de peinture.

Après préparation du mur de façon traditionnelle, la toile de verre est fixée sur le mur ou sur un autre support à l'aide d'une colle. Après séchage de la colle, une peinture faiblement opacifiante, par exemple une peinture semi-transparente ou lasure, est appliquée en une couche. Dans les zones revêtues de l'apprêt hyrophobe, l'accrochage de la peinture est limité, tandis que dans les zones non revêtues de cet apprêt le réseau fibreux possédant un caractère très hydrophile, la peinture est fortement absorbée. Il en résulte une différence de couleur dans les zones ayant reçu l'apprêt et dans les zones non revêtues par celui-ci, ces différences de couleur permettant de mettre en évidence des motifs décoratifs. Si une seconde couche de peinture est appliquée, le contraste sera encore plus important entre les zones ayant reçu l'apprêt hydrophobe et les zones ne l'ayant pas reçu. Après application de la peinture, il est possible de passer une couche de protection, par exemple d'un vernis protecteur pour obtenir une finition brillante.

L'apprêt hydrophobe peut être déposé sur la face avant de la toile à l'aide d'un cadre rotatif. C'est pour assurer une bonne précision du dépôt de cet apprêt que le tissu de verre doit présenter un caractère lisse.

A cet effet, le titre des fils de trame est sensiblement plus élevé que le titre des fils de chaîne.

Suivant une forme d'exécution, le titre des fils de trame est au moins cinq fois plus élevé que le titre des fils de chaîne.

Afin de faciliter la formation d'une couche barrière sur la face arrière du tissu, il convient que la contexture de celui-ci soit la plus fermée possible.

Avantageusement, à cet effet, la réduction des fils de chaîne et de trame est au moins de cinq fils par centimètre.

Suivant une forme d'exécution de cette toile, celle-ci est constituée par un tissu dont la matière textile en chaîne est un fil de silionne de l'ordre de 34 tex avec une réduction de 7,4 fils par centimètre, la matière textile en trame est une mèche de l'ordre de 200 tex avec une réduction de cinq fils par centimètre, et possédant une masse surfacique de l'ordre de 75 g/m².

Conformément à une autre caractéristique de l'invention, l'apprêt hydrophobe appliqué localement sur la face avant comprend:
- un élément de structure,
- une charge blanche et occultante,
- un agent ignifugeant,
- des agents hydrofugeants.

Suivant une possibilité :
- l'élément de structure est constitué par un amidon,
- la charge blanche et occultante est constituée par de l'oxyde de titane,
- l'agent ignifugeant est composé d'un trioxyde d'antimoine,
- les agents hydrofugeants sont du type résine de zirconium, paraffine et acrylique.

Avantageusement, la viscosité de l'apprêt hydrophobe déposé sur la face avant permet une migration de l'apprêt à coeur à l'intérieur du tissu, dans les zones d'imprégnation de celui-ci.

Il est important que, dans les zones dans lesquelles l'apprêt hydrophobe a été déposé, les fibres soient parfaitement imprégnées de cet apprêt, afin de fixer le moins possible la peinture, lors du passage de peinture sur la toile.

Selon une forme d'exécution de cette toile, la couche barrière couvrant la face arrière du tissu est constituée par un apprêt possédant la même formulation générale que l'apprêt déposé localement sur la face avant, cet apprêt étant déposé sur toute la surface de la face arrière et possédant une viscosité plus élevée que celle du premier apprêt, pour former seulement un dépôt en surface du tissu et ne pas migrer à l'intérieur du tissu, afin de conserver aux fibres leur caractère hydrophile.

De toute façon, l'invention sera bien comprise à l'aide de la description qui suit, en référence au dessin schématique annexé représentant, à titre d'exemple non limitatif, une forme d'exécution de cette toile :
Figure 1 est une vue de la face avant d'un morceau de toile selon l'invention, avant pose sur le mur ;
Figures 2 à 4 sont trois vues très schématiques en coupe représentant la toile au cours de trois stades de fabrication ;
Figure 5 est une vue de cette même toile après pose sur un support et application d'une couche de peinture.

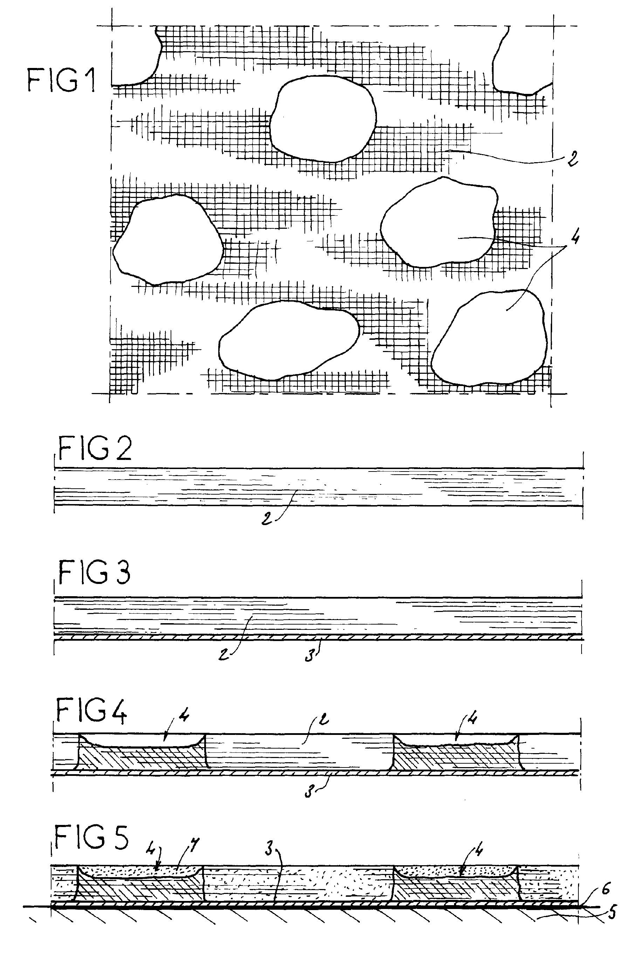

La figure 1 représente un morceau de tissu de verre 2 selon l'invention obtenu par tissage, comportant des fils de chaîne et des fils de trame schématisés au dessin, et pouvant posséder la composition qui a été définie précédemment, afin que le tissu possède une contexture fermée et présente une surface lisse. Le tissu, après tissage, est représenté en coupe à la figure 2.

Une couche barrière 3 est appliquée, par exemple à l'aide d'un cadre tournant, sur la face arrière du tissu. Cette couche barrière est constituée par un apprêt comprenant, par exemple, un élément de structure à base d'amidon, une charge blanche et occultante à base d'oxyde de titane, un agent ignifugeant à base de trioxyde d'antimoine et des agents hydrofugeants du type résine de zirconium, paraffine et acrylique. La viscosité de cet apprêt est choisie de telle sorte que celui-ci demeure en surface, c'est-à-dire bouche les pores du tissu sans pénétrer dans les fibres de celui-ci, comme montré à la figure 3.

Il est ensuite procédé, également à l'aide d'un cadre rotatif et sur la face avant du tissu, à l'impression de motifs 4 réalisés à partir d'un apprêt hydrophobe possédant la même composition générale que l'apprêt défini précédemment, mais se présentant sous une viscosité beaucoup plus faible, afin de permettre une imprégnation à coeur du tissu dans les zones imprégnées. Dans ces zones, les fibres perdent leur caractère hydrophile. Le tissu se présente donc en coupe sous la forme schématisée à la figure 4.

Le tissu est ensuite posé de façon traditionnelle sur un mur 5 avec interposition d'une couche de colle 6. Après séchage complet de la colle, au bout de plusieurs heures, une couche de peinture 7 est appliquée, cette peinture étant une peinture semi-transparente ou une lasure. Comme cela est schématisé à la figure 5, la peinture va demeurer en surface dans les zones 4 ayant été imprégnées par de l'apprêt et pénètre à l'intérieur du tissu, compte tenu du caractère hydrophile de celui-ci, dans les zones qui n'avaient pas été préalablement imprégnées d'apprêt.

Après séchage de la peinture, les motifs correspondant aux zones imprégnées d'apprêt sont révélés en raison d'une différence de ton entre lesdites zones et les zones qui n'avaient pas été imprégnées. Cette différence de ton de la peinture résulte de l'absorption différentielle de celle-ci dans les zones imprégnées d'apprêt et dans celles qui ne l'ont pas été.

Comme il ressort de ce qui précède, l'invention apporte une grande amélioration à la technique existante en fournissant une toile de verre à peindre susceptible de comporter des motifs décoratifs, indépendamment de la nature de l'armure, sans que ces motifs ne nécessitent la mise en oeuvre d'une technique particulière lors de la pose de la toile et de sa peinture.

Comme il va de soi, l'invention ne se limite pas à la seule forme d'exécution de cette toile, décrite ci-dessus à titre d'exemple, elle en embrasse au contraire toutes les variantes. C'est ainsi notamment que la couche barrière située sur la face arrière pourrait être constituée par un film, que la nature des fils constitutifs de la toile pourrait être différente de celle indiquée à titre d'exemple ou encore que l'apprêt pourrait être déposé par une technique autre qu'un cadre rotatif, sans que l'on sorte pour autant du cadre de l'invention.

## Revendications

1. Toile de verre à peindre pour la finition et la décoration de l'intérieur de bâtiments, **caractérisée en ce qu**'elle est constituée par un tissu (2) à contexture fermée et présentant une surface lisse, dont la face arrière, destinée à être appliquée contre un support, tel qu'un mur, comporte une couche barrière (3) compatible avec la colle, occultant le support et empêchant la migration de colle à travers le tissu, et dont la face avant comporte localement des zones (4) revêtues d'un apprêt hydrophobe appliqué suivant des motifs qui sont à révéler après application d'une couche de peinture (7).

2. Toile selon la revendication 1, **caractérisée en ce que** le titre des fils de trame est sensiblement plus élevé que le titre des fils de chaîne.

3. Toile selon la revendication 2, **caractérisée en ce que** le titre des fils de trame est au moins cinq fois plus élevé que le titre des fils de chaîne.

4. Toile selon l'une des revendications 1 à 3, **caractérisée en ce que** la réduction des fils de chaîne et de trame est au moins de cinq fils par centimètre.

5. Toile selon l'ensemble des revendications 1 à 4, **caractérisée en ce qu**'elle est constituée par un tissu (2) dont la matière textile en chaîne est un fil de silionne de l'ordre de 34 tex avec une réduction de 7,4 fils par centimètre, la matière textile en trame est une mèche de l'ordre de 200 tex avec une réduction de cinq fils par centimètre, et possédant une masse surfacique de l'ordre de 75 g/m².

6. Toile selon l'une des revendications 1 à 5, **caractérisée en ce que** l'apprêt hydrophobe appliqué localement sur la face avant comprend :
- un élément de structure,
- une charge blanche et occultante,
- un agent ignifugeant,
- des agents hydrofugeants.

7. Toile selon la revendication 6, **caractérisée en ce que** :
- l'élément de structure est constitué par un amidon,
- la charge blanche et occultante est constituée par de l'oxyde de titane,
- l'agent ignifugeant est composé d'un trioxyde d'antimoine,
- les agents hydrofugeants sont du type résine de zirconium, paraffine et acrylique.

8. Toile selon l'une quelconque des revendications 6 et 7, **caractérisée en ce que** la viscosité de l'apprêt hydrophobe déposé sur la face avant permet une migration de l'apprêt à coeur à l'intérieur du tissu, dans les zones d'imprégnation de celui-ci.

9. Toile selon l'une quelconque des revendications 6 à 8, **caractérisée en ce que** la couche barrière (3) couvrant la face arrière du tissu est constituée par un apprêt possédant la même formulation générale que l'apprêt déposé localement sur la face avant, cet apprêt étant déposé sur toute la surface de la face arrière et possédant une viscosité plus élevée que celle du premier apprêt, pour former seulement un dépôt en surface du tissu et ne pas migrer à l'intérieur du tissu.

10. Revêtement comportant une toile selon l'une des revendications 1 à 9, **caractérisé en ce que** la face avant de la toile est revêtue d'une peinture semi-transparente ou lasure.
